# DEMANDE DE BREVET EUROPEEN

(11) **EP 4 309 870 A1**
(43) Date de publication de la demande: **24.01.2024**
(21) Numéro de dépôt: 23181393.2
(22) Date de dépôt: 26.06.2023
(51) Int. Cl.: B29C 45/14, B29C 45/16, B29C 33/14, B29C 45/33, B29C 45/26

(54) **PROCÉDÉ ET ENSEMBLE DE FABRICATION D'UNE PIÈCE**

(30) Priorité: 29.06.2022 FR 2206526
(71) Demandeur: Faurecia Intérieur Industrie, 92000 Nanterre (FR)
(72) Inventeur: PRUVOT, Anthony, 60000 FROCOURT (FR)
(74) Mandataire: Lavoix

(57) **Abrégé**

La pièce (1) comprend une couche de support (3), une couche de décor (5) et une partie structurelle (7). Le procédé comprend les étapes suivantes :
- introduction dans un moule (9) d'une feuille de support (11) portant la couche de décor (5) ;
- pincement de la feuille de support (11) contre une première partie (13) du moule par un cadre (15) ;
- fermeture du moule (9), une première surface (27) de la première partie de moule (13) et une seconde surface (29) d'une seconde partie de moule (25) délimitant ensemble une cavité (31);
- injection de la couche de support (3) dans la cavité (31) et transfert de la couche de décor (5);
- ouverture du moule (9), la couche de support (3) restant fixée à la première partie de moule (13) par au moins un organe de blocage (33) mobile monté sur le cadre (15) ;
- fermeture du moule (9), la première surface (27) de la première partie de moule (13) et une autre seconde surface (35) d'une autre seconde partie de moule (37) délimitant ensemble une autre cavité (39) ;
- déplacement de l'au moins un organe de blocage (33) par rapport au cadre (15) à une position de libération de la couche de support (3) ;
- injection de la partie structurelle (7) dans l'autre cavité (39) et évacuation de la pièce (1).

## Description

La présente invention concerne en général un procédé d'injection de type IMD (In Mold Décoration, ou décoration en moule).

Un tel procédé peut être utilisé pour la fabrication d'une pièce comportant une couche de support, une couche de décor couvrant une première face de la couche de support et une partie structurelle fixée à une seconde face de la couche de support opposée à la première face.

La première face de la couche de support est la face visible.

Il est dans ce cas particulièrement intéressant d'utiliser le même moule pour injecter la couche de support et la partie structurelle.

Il est possible d'injecter d'abord la partie structurelle, la couche de support étant ensuite injectée entre la couche de décor et la partie structurelle.

Il a été observé dans ce cas des défauts sur la face visible de la pièce.

Dans ce contexte, l'invention vise à proposer un procédé de fabrication permettant de mieux maitriser la qualité des pièces produites.

A cette fin, l'invention vise un procédé de fabrication d'une pièce comprenant une couche de support, une couche de décor couvrant une première face de la couche de support, et une partie structurelle fixée à une seconde face de la couche de support opposée à la première face, le procédé comprenant les étapes suivantes :
- introduction dans un moule d'une feuille de support, la couche de décor étant déposée sur la feuille de support;
- pincement de la feuille de support contre une première partie du moule par un cadre;
- fermeture du moule, une première surface de la première partie de moule et une seconde surface d'une seconde partie de moule délimitant ensemble une cavité, la feuille de support étant engagée dans la cavité en vis-à-vis de la première surface, la couche de décor s'étendant en vis-à-vis de la seconde surface ;
- injection de la couche de support dans la cavité entre la couche de décor et la seconde surface, la couche de décor étant transférée sur la couche de support;
- ouverture du moule, la couche de support restant fixée à la première partie de moule par au moins un organe de blocage mobile monté sur le cadre, l'au moins un organe de blocage occupant par rapport au cadre une position de blocage de la couche de support;
- fermeture du moule, la première surface de la première partie de moule et une autre seconde surface d'une autre seconde partie de moule délimitant ensemble une autre cavité, la couche de support étant engagée dans l'autre cavité en vis-à-vis de l'autre seconde surface ;
- déplacement de l'au moins un organe de blocage par rapport au cadre à une position de libération dans laquelle la couche de support n'est pas fixée à la première partie de moule par l'organe de blocage;
- injection de la partie structurelle dans l'autre cavité entre la couche de support et l'autre seconde surface;
- ouverture du moule et évacuation de la pièce.

Le procédé de fabrication de l'invention permet d'injecter d'abord la couche de support, et dans un deuxième temps la partie structurelle.

Ceci permet de mieux maitriser la qualité de la pièce obtenue.

En effet, la partie structurelle est généralement plus massive. Dans le cas d'un procédé de fabrication à haute cadence, si la partie structurelle est injectée avant la couche de support, elle n'a pas le temps de se refroidir et de se solidifier complètement avant injection de la couche de support.

En conséquence, la solidification de la partie structurelle se termine après injection de la couche de support, et il y a un risque de formation de retassures sur la face visible de la couche de support.

Dans le procédé de l'invention, du fait que la couche de support est injectée avant la partie structurelle, il ne se produit pas de retassures sur la face visible de la couche de support.

Une telle organisation du procédé de fabrication, avec injection en premier lieu de la couche de support puis en second lieu de la partie structurelle, est rendue possible du fait que le cadre maintient la feuille de support contre la première partie de moule.

Le cadre intègre au moins un organe de blocage permettant de fixer la couche de support à la première partie de moule après ouverture du moule. Ceci permet, après l'étape d'injection de la couche de support, de mettre en place l'autre seconde partie de moule, permettant d'injecter la partie structurelle.

Le procédé de fabrication peut en outre présenter une ou plusieurs des caractéristiques ci-dessous, considérées individuellement ou selon toutes les combinaisons techniquement possibles :
- l'étape d'introduction est effectuée en déplaçant par rapport à la première partie de moule un film continu comportant un grand nombre de feuilles portant chacune une couche de décor ;
- la couche de décor comprend une couche d'encre ;
- le ou chaque organe de blocage est mobile en translation par rapport au cadre entre la position de blocage et la position de libération ;
- le ou chaque organe de blocage est sollicité vers la position de blocage par un organe de rappel monté sur le cadre ;
- le ou chaque organe de blocage est déplacé dans la position de libération par un organe de came monté sur l'autre seconde partie de moule.

Selon un second aspect, l'invention porte sur un ensemble de fabrication d'une pièce comprenant une couche de support, une couche de décor couvrant une première face de la couche de support et une partie structurelle fixée à une seconde face de la couche de support opposée à la première face, l'ensemble comprenant :
- un moule comprenant une première partie de moule présentant une première surface et une seconde partie de moule présentant une seconde surface, les première et seconde parties de moule étant mobiles l'une par rapport à l'autre entre une position d'ouverture du moule et une position de fermeture du moule, la première surface et la seconde surface délimitant ensemble une cavité en position de fermeture du moule ;
- un dispositif d'introduction dans le moule d'une feuille de support, la couche de décor étant déposée sur la feuille de support;
- un dispositif de pincement de la feuille contre la première partie du moule par un cadre, la feuille de support étant engagée dans la cavité en vis-à-vis de la première surface, la couche de décor s'étendant à l'opposé de la première surface;
- un dispositif d'injection de la couche de support dans la cavité entre la couche de décor et la seconde surface, la couche de décor étant adaptée pour être transférée sur la couche de support lors de l'injection ;
- au moins un organe de blocage mobile monté sur le cadre, l'au moins un organe de blocage étant déplaçable par rapport au cadre entre une position de blocage dans laquelle la couche de support est fixée à la première partie de moule par l'organe de blocage et une position de libération dans laquelle la couche de support n'est pas fixée à la première partie de moule par l'organe de blocage ;
- une autre seconde partie de moule présentant une autre seconde surface, la première partie de moule et l'autre seconde partie de moule étant mobiles l'une par rapport à l'autre entre une autre position d'ouverture du moule et une autre position de fermeture du moule, la première surface et l'autre seconde surface délimitant ensemble une autre cavité dans l'autre position de fermeture, la couche de support étant engagée dans l'autre cavité en vis-à-vis de l'autre seconde surface dans l'autre position de fermeture ;
- un dispositif d'injection de la partie structurelle dans l'autre cavité entre la couche de support et l'autre seconde surface;
- un dispositif de déplacement de l'au moins un organe de blocage par rapport au cadre jusqu'à la position de libération..

L'ensemble peut en outre présenter une ou plusieurs des caractéristiques ci-dessous, considérées individuellement ou selon toutes les combinaisons techniquement possibles :
- le ou chaque organe de blocage est mobile en translation par rapport au cadre entre la position de blocage et la position de libération ;
- le cadre comprend un organe de rappel sollicitant le ou chaque organe de blocage vers la position de blocage ;
- le dispositif de déplacement comprend pour le ou chaque organe de blocage un organe de came monté sur l'autre seconde partie de moule.

D'autres caractéristiques et avantages de l'invention ressortiront de la description détaillée qui en est donnée ci-dessous, à titre d'indicatif et nullement limitatif, en référence aux figures 1 à 9 annexées [Fig 1] [Fig 2] [Fig 3] [Fig 4] [Fig 5] [Fig 6] [Fig 7] [Fig 8] [Fig 9], ces figures montrant les étapes successives du procédé de fabrication.

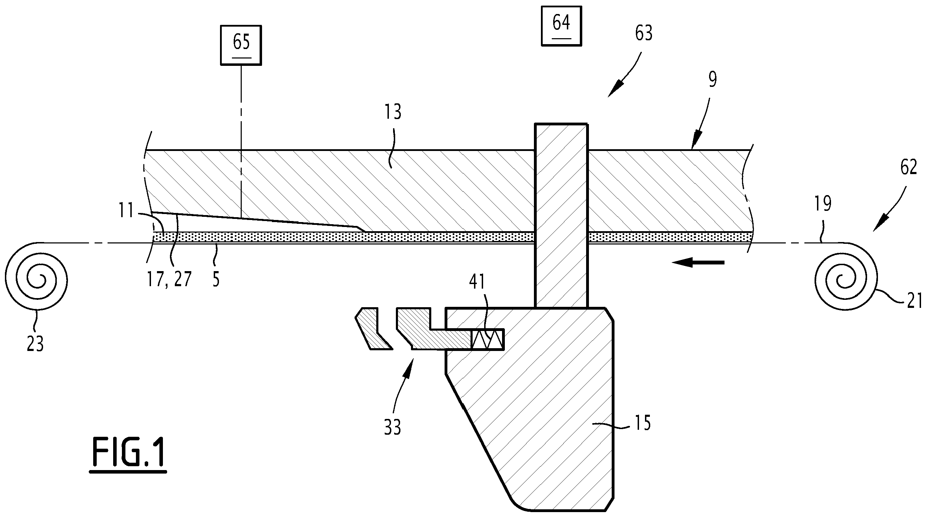

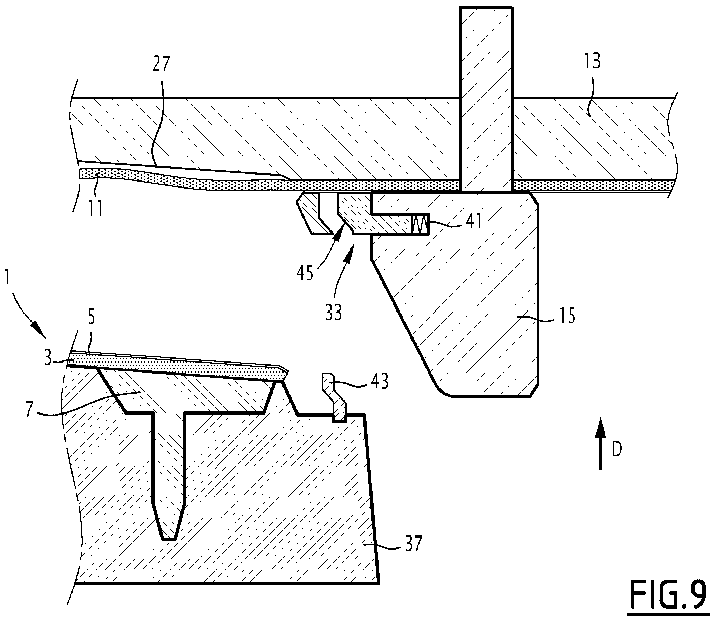

Le procédé et l'ensemble de fabrication illustrés sur les figures 1 à 9 sont prévus pour la fabrication d'une pièce 1 comprenant, comme visible sur la figure 9, une couche de support 3, une couche de décor 5 couvrant une première face de la couche de support 3 et une partie structurelle fixée 7 à une seconde face de la couche de support 3 opposée à la première face.

Cette pièce est typiquement une pièce de l'intérieur d'un véhicule, notamment automobile, par exemple une pièce de l'habitacle de ce véhicule.

Par exemple, la pièce est une pièce d'habillage d'un ouvrant du véhicule, ou une partie de la planche de bord, ou une partie de la console centrale, ou toute autre pièce de l'habitacle.

La couche de support 3 est typiquement en une matière plastique, par exemple en polycarbonate (PC), en poly méthacrylate de méthyle acrylique (PMMA), en polypropylène (PP), en acrylonitrile butadiène styrène (ABS), ou en un mélange PC/ABS.

La matière plastique est par exemple transparente ou translucide, notamment pour des applications de rétroéclairage de la couche de décor.

Dans ce cas, la pièce comprend une source lumineuse adaptée pour injecter de la lumière dans la couche 3.

La première face de cette couche de support 3 correspond au côté visible de la pièce 1. Cette première face est couverte par la couche de décor 5. Cette couche de décor 5 est typiquement une couche d'encre.

La seconde face de la couche de support 3 est masquée vis-à-vis des passagers du véhicule.

La partie structurelle 7 est une partie typiquement plus massive que la couche de support 3. Elle définit par exemple les points de fixation de la pièce 1 à la structure du véhicule, ou d'autres éléments fonctionnels de la pièce.

La partie structurelle 7 recouvre tout ou partie de la seconde face de la couche de support 3.

La couche de décor 5 recouvre tout ou partie de la première face de la couche de support 3.

La partie structurelle 7 est typiquement en une matière plastique, par exemple en polycarbonate (PC), en poly méthacrylate de méthyle acrylique (PMMA), en polypropylène (PP), en acrylonitrile butadiène styrène (ABS), ou en un mélange PC/ABS.

Le procédé de fabrication de la pièce va maintenant être décrit, en référence aux figures 1 à 9.

Ce procédé est du type IMD (In Mold Décoration, ou décoration en moule).

Le procédé comporte une étape d'introduction dans un moule 9 d'une feuille de support 11, la couche de décor 5 étant déposée sur la feuille de support 11. La situation à la fin de l'étape d'introduction est illustrée sur la figure 1.

La feuille de support 11 présente une épaisseur comprise entre 25 microns et 100 microns, valant typiquement 50 ou 75 microns.

La couche de décor 5 présente une épaisseur comprise entre 5 et 50 microns, valant typiquement 15 microns.

La couche de support 3 présente une épaisseur comprise entre 2 et 5 mm, valant typiquement 2,5 mm.

Il est à noter que la couche de décor 5, selon une variante avantageuse, comprend en outre:
- une couche de protection de la couche de décor 5 disposée sur la couche de décor 5 ; et/ou
- une couche de colle disposée sous la couche de décor 5.

De préférence, une couche de séparation (non représentée) est agencée entre la feuille de support 11 et la couche de décor 5, la couche de séparation restant sur la feuille 11 après transfert de la couche de décor sur la pièce.

Le procédé comporte ensuite une étape de pincement de la feuille 11 contre une première partie 13 de moule, par un cadre 15.

La première partie de moule 13 comporte typiquement une empreinte en creux 17. Le cadre 15 est avantageusement agencé sur toute la périphérie de l'empreinte en creux 17, et plaque une zone à contour fermé de la feuille 11, de manière étanche, contre la première partie de moule 13.

A cette fin, un joint (non représenté) est de préférence prévu entre le cadre 15 et la première partie de moule 13. Ce joint suit la forme du cadre 15, et contribue à l'obtention de l'étanchéité nécessaire à l'étape de placage de la feuille 11 au fond de la surface en creux 17 par aspiration, décrite ci-dessous.

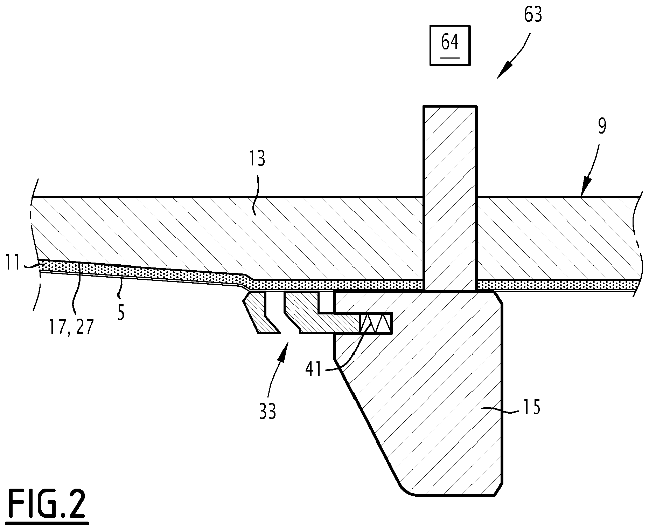

Le procédé comporte encore de préférence une étape consistant à plaquer la feuille 11, portant le décor 5, au fond de la surface en creux 17. Cette étape est effectuée par aspiration, autrement dit en tirant au vide le volume délimité entre l'empreinte en creux 17 et la feuille 11. La situation après plaquage de la feuille est illustrée sur la figure 2.

L'étape d'introduction est effectuée en déplaçant par rapport à la première partie de moule 13, un film continu 19 comportant un grand nombre de feuilles 11, chaque feuille 11 portant une couche de décor 5.

Le film 19 est typiquement stocké sous la forme d'une bobine 21, représentée schématiquement sur la figure 1. Au cours de l'étape d'introduction, le film 19 est débobiné, de manière à introduire dans le moule 9 une nouvelle feuille 11, portant un décor 5.

La feuille 11 utilisée à l'itération précédente du procédé de fabrication, qui ne comporte plus le décor 5 du fait que celui-ci a été transféré sur la pièce 1, est extraite hors du moule 9 par le même mouvement, et est enroulée sur une autre bobine 23. Le mouvement du film 19 au cours de l'étape d'introduction est matérialisé par une flèche sur la figure 1.

Le cadre 15 est typiquement à contour fermé.

Au cours de l'étape d'introduction, le cadre 15 occupe une position écartée de la première partie de moule 9 (figure 1), de telle sorte que le film 19 peut être déplacé par rapport à la première partie de moule 13. Au cours de l'étape de pincement, le cadre 15 est déplacé par rapport à la première partie de moule 13 de la position écartée à une position de pincement (figure 2). Dans la position de pincement, le cadre 15 porte contre la première partie de moule 13, la feuille 11 étant interposée et pincée entre la première partie de moule 13 et le cadre 15.

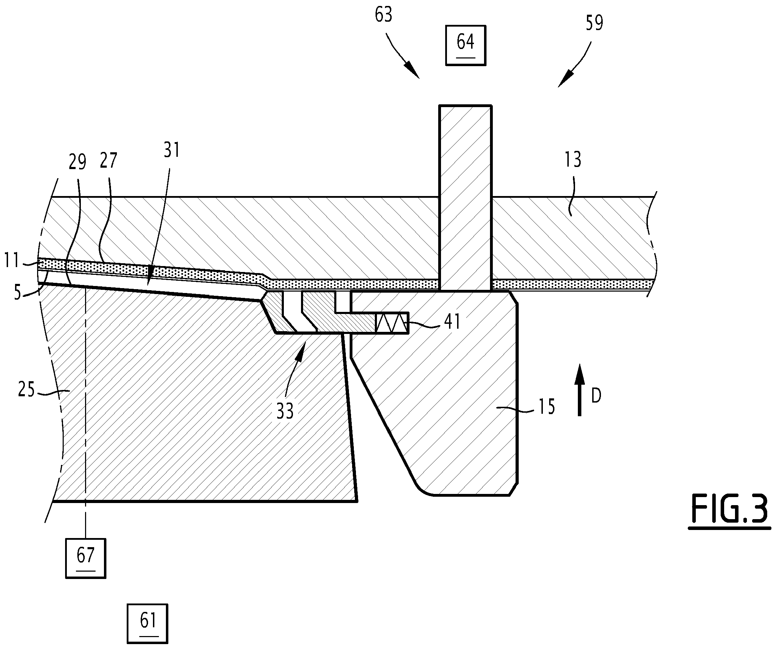

Le procédé comporte ensuite une étape de fermeture du moule, la figure 3 illustrant la situation à la fin de cette étape de fermeture.

Cette étape est réalisée en déplaçant l'une par rapport à l'autre, la première partie de moule 13 et une seconde partie de moule 25. Les première et seconde parties de moule 13, 25 sont déplacées depuis une position d'ouverture du moule 9 jusqu'à une position de fermeture du moule 9. Cette position est illustrée sur la figure 3.

Dans cette position, une première surface 27 de la première partie de moule 13 et une seconde surface 29 de la seconde partie de moule 25 délimitent ensemble une cavité 31.

La première surface 27 correspond ici à l'empreinte en creux 17.

La feuille de support 11 est engagée dans la cavité 31, et s'étend en vis-à-vis de la première surface 27. La couche de décor 5, portée par la feuille 11, s'étend vis-à-vis de la seconde surface 29.

Après plaquage, la feuille 11 s'étend non seulement en vis-à-vis mais aussi contre la première surface 27.

La cavité 31 présente sensiblement la forme de la couche de support 3.

Le procédé comporte encore une étape d'injection de la couche de support 3 dans la cavité 31, entre la couche de décor 5 et la seconde surface 29.

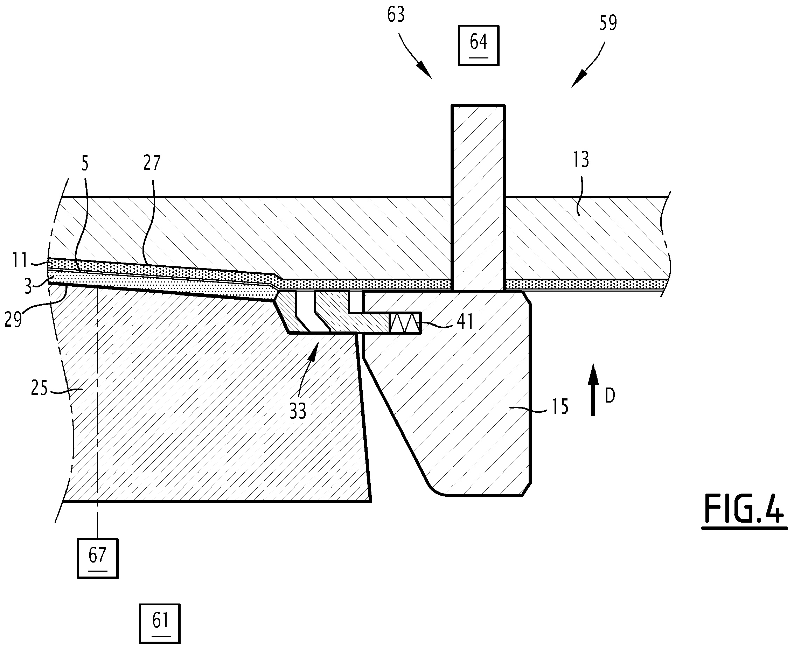

Au cours de cette étape d'injection, la couche de décor 5 est transférée sur la couche de support 3. La situation à l'issue de l'étape d'injection de la couche de support 3 est représentée sur la figure 4.

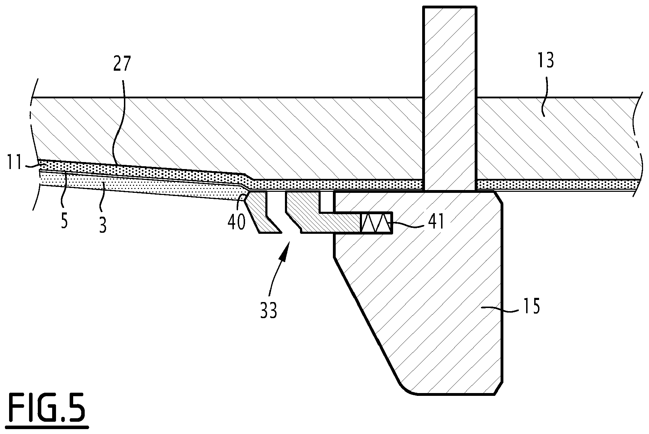

Le procédé comporte ensuite une étape d'ouverture du moule 9. La première partie de moule 13 et la seconde partie de moule 25 sont déplacées l'une par rapport à l'autre, depuis la position de fermeture jusqu'à la position d'ouverture. La situation à l'issue de l'étape d'ouverture du moule est illustrée sur la figure 5.

Comme visible sur cette figure, la couche de support 3 reste fixée à la première partie de moule 13 par au moins un organe de blocage mobile 33 monté sur le cadre 15.

Comme visible sur la figure 5, l'au moins un organe de blocage 33 occupe par rapport au cadre 15 une position de blocage de la couche de support 3.

Dans cette position, l'organe de blocage 33 délimite une partie de la cavité 31, notamment pendant l'étape d'injection.

Le procédé de l'invention comporte ensuite une nouvelle étape de fermeture du moule 9, la première surface 27 de la première partie de moule 13 et une autre seconde surface 35 d'une autre seconde partie de moule 37 délimitant ensemble une autre cavité 39.

L'autre cavité 39 présente sensiblement la forme de la partie structurelle 7.

L'autre seconde partie de moule 37 est différente de la seconde partie de moule 25. Elle remplace la seconde partie de moule 25.

La fermeture du moule est réalisée en déplaçant la première partie de moule 13 et l'autre seconde partie de moule 37, l'une par rapport à l'autre. En position de fermeture du moule, la couche de support 3 est engagée dans l'autre cavité 39 en vis-à-vis de l'autre seconde surface 35.

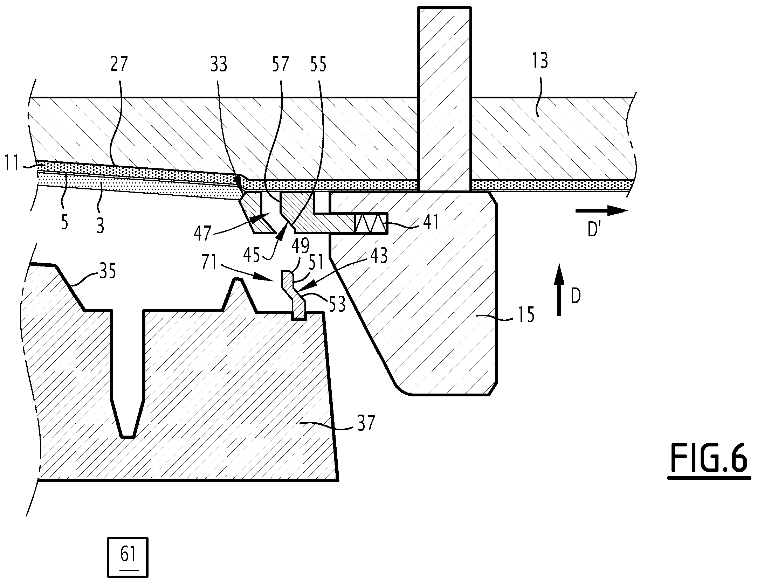

La figure 6 illustre la première partie de moule portant la couche de support 3, bloquée par au moins un organe de blocage 33, ainsi que l'autre seconde partie de moule 37, avant fermeture complète du moule 9.

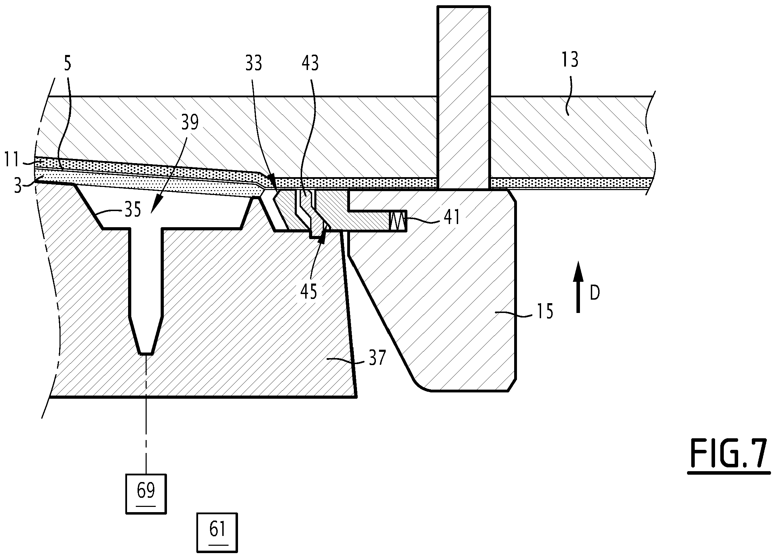

La Figure 7 illustre la situation du moule, à l'issue de l'étape de fermeture.

Il est à noter que l'autre seconde partie de moule 37 vient au contact de la couche de support 3 pour fermer la cavité 39.

En variante ou en complément, l'autre seconde partie de moule 37 vient directement au contact de la première partie de moule 13 pour fermer la cavité 39.

En variante ou en complément, l'autre seconde partie de moule 37 vient au contact de l'organe de blocage 33 pour fermer la cavité 39.

Le procédé comprend ensuite une étape d'injection de la partie structurelle 7 dans l'autre cavité 39, entre la couche de support 3 et l'autre seconde surface 35.

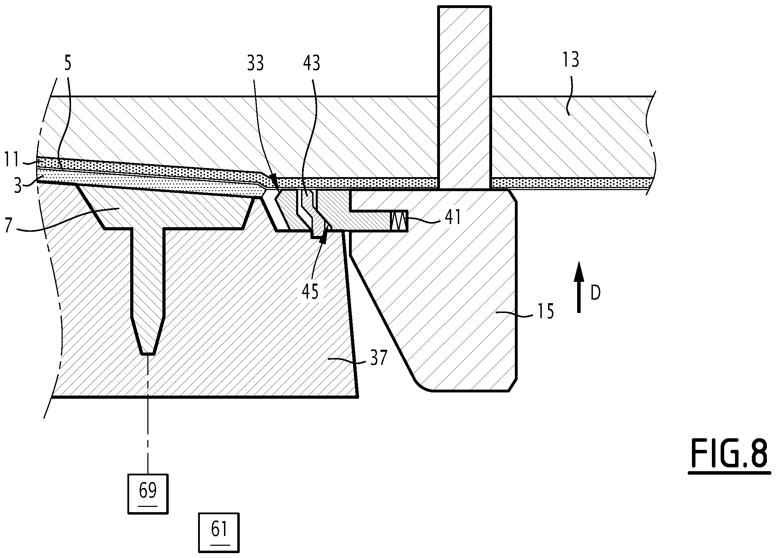

La Figure 8 illustre la situation à l'issue de l'étape d'injection de la partie structurelle.

Le procédé comporte par ailleurs une étape de déplacement de l'au moins un organe de blocage 33 par rapport au cadre 15 jusqu'à une position de libération dans laquelle la couche de support 3 n'est pas fixée à la première partie de moule 13 par l'organe de blocage 33.

Dans l'exemple représenté, ce déplacement de l'au moins un organe de blocage 33 par rapport au cadre 15 depuis la position de blocage jusqu'à la position de libération est concomitante avec l'étape de fermeture du moule. Elle intervient donc avant l'étape d'injection de la partie structurelle 7.

En variante, l'étape de déplacement de l'au moins un organe de blocage 33 par rapport au cadre 15 jusqu'à la position de libération est effectuée après l'étape d'injection. Ceci est possible notamment quand l'organe de blocage 33 est déplacé par un actionneur hydraulique ou pneumatique.

Le procédé comporte encore une étape d'ouverture du moule 9 et d'évacuation de la pièce 1.

Cette étape est illustrée sur la figure 9.

L'étape d'ouverture et d'évacuation est effectuée en déplaçant la première partie de moule 13 et l'autre seconde partie de moule 37, l'une par rapport à l'autre.

La pièce 1 vient avec l'autre seconde partie de moule 37, du fait qu'elle n'est plus bloquée par au moins un organe de blocage 33. Elle est ainsi évacuée avec l'autre seconde partie de moule 37.

Dans l'exemple représenté, l'autre seconde partie de moule 37 est déplacée vers le bas par rapport à la première partie de moule 13 au cours du mouvement d'ouverture du moule.

Typiquement, le procédé comporte encore une étape de libération de la feuille 11, réalisée déplaçant le cadre 15 de la position de pincement à la position écartée.

Une nouvelle itération du procédé est ensuite possible, par introduction dans le moule 9 d'une nouvelle feuille de support 11, portant une nouvelle couche de décor 5.

Le cadre 15 typiquement comporte plusieurs organes de blocage 33, répartis sur le pourtour de ce cadre 15, et permettant donc de retenir la couche de support 3 en plusieurs points répartis sur sa périphérie.

Chaque organe de blocage 33 est avantageusement mobile en translation par rapport au cadre 15 entre la position de blocage et la position de libération.

Typiquement, les organes de blocage 33 sont mobiles en translation dans un plan perpendiculaire à la direction D de fermeture du moule.

Cette direction D correspond à la direction dans laquelle la première partie de moule 13 et la seconde partie de moule 25 se déplacent l'une par rapport à l'autre pendant les opérations d'ouverture et de fermeture du moule. La première partie de moule 13 et l'autre seconde partie de moule 25 se déplacent l'une par rapport à l'autre selon la même direction.

Cette direction D est typiquement rectiligne. Elle est matérialisée par une flèche sur les figures.

Le ou chaque organe de blocage 33 est un doigt, ou un tiroir, ou tout autre organe du même type.

Dans l'exemple représenté, le ou chaque organe de blocage 33 présente un bord biseauté 40, d'orientation adaptée pour retenir la couche de support 3 contre la première partie de moule 13.

Plus précisément, chaque organe de blocage 33 présente une extrémité en V, le bord biseauté 40 constituant l'aile du V tournée vers la première surface 27.

Dans la position de blocage, le bord biseauté 40 vient porter contre une tranche de la couche de support 3, sollicitant celle-ci contre la première surface 27 du fait de son orientation.

Comme visible sur les figures, le ou chaque organe de blocage 33 est sollicité vers la position de blocage par un organe de rappel 41 monté sur le cadre 15.

Le ou chaque organe de blocage 33 est déplacé dans la position de libération par un organe de came 43 monté sur l'autre seconde partie de moule 37.

Comme illustré sur les figures 6 à 9, l'organe de came 43 est un doigt pointant vers la première partie de moule 13, sensiblement suivant la direction de déplacement D.

Le ou chaque organe de blocage 33 comporte une forme formant un suiveur de came 45, coopérant avec l'organe de came 43 pour déplacer l'organe de blocage 33 depuis sa position de blocage jusqu'à sa position de libération.

Dans la position de libération, l'organe de blocage 33 est décalé à distance de la couche de support 3, dans un plan perpendiculaire à la direction de déplacement D. Le bord biseauté 40 ne porte plus contre le bord périphérique de la couche de support 3.

Dans l'exemple représenté, la forme 45 formant suiveur de came est une surface interne d'un orifice 47 traversant l'organe de blocage 33.

Comme indiqué plus haut, le déplacement de la première partie de moule 13 et de l'autre seconde partie de moule 37 l'une par rapport à l'autre pour la fermeture du moule correspond à un déplacement de l'autre seconde partie de moule 37 vers la première partie de moule 13 suivant la direction D.

Le déplacement en translation de l'organe de blocage 33 depuis sa position de blocage vers sa position de libération correspond à un déplacement suivant une direction D', perpendiculaire à la direction D et matérialisé sur la figure 6.

La surface de came 43 comporte successivement trois tronçons 49, 51, 53. Le premier tronçon 49 est placé de manière à entrer en contact le premier avec la forme 45 formant suiveur de came lors de la fermeture du moule. Le premier tronçon 49 est incliné par rapport à la direction D et par rapport à la direction D'. Il est tourné vers la première partie de moule 13 et vers la zone du cadre portant l'organe de blocage 33.

Le second tronçon 51 prolonge le premier tronçon 49. Il s'étend dans un plan sensiblement parallèle à la direction D.

Le troisième tronçon 53 prolonge le second tronçon 51. Il présente sensiblement la même orientation que le premier tronçon 49.

La forme formant suiveur de came 45 comporte un premier tronçon complémentaire 55 et un second tronçon complémentaire 57. Le premier tronçon complémentaire 55 entre le premier en contact avec la surface de came 43 lors de la fermeture du moule. Le second tronçon complémentaire 57 prolonge le premier.

Le premier tronçon complémentaire 55 est tourné à la fois vers l'autre seconde partie de moule 37 et à l'opposé de la zone du cadre 15 portant l'organe de blocage 33.

La seconde zone complémentaire 57 est parallèle à la direction D.

Au cours du mouvement de fermeture du moule 9, quand la première partie de moule 13 et l'autre seconde partie de moule 37 se déplacent l'une vers l'autre suivant la direction D, le premier tronçon 49 vient d'abord porter contre le premier tronçon complémentaire 55.

Au fur et à mesure que l'autre seconde partie de moule 37 se rapproche de la première partie de moule 13, le premier tronçon 49 appuie sur le premier tronçon complémentaire 55, cet appui provoquant un déplacement de l'organe de blocage 33 suivant la direction D', à partir de la position de blocage vers la position de libération. Ce déplacement est à l'encontre de l'effort de rappel de l'organe de rappel 41.

Quand le premier tronçon 49 atteint l'extrémité du premier tronçon complémentaire 55, l'organe de blocage 33 arrive dans sa position de libération. Le second tronçon 51 se déplace alors contre le second tronçon complémentaire 57, parallèlement à la direction D.

De ce fait, au cours de la fin du déplacement de l'autre seconde partie de moule 37 suivant la direction D, l'organe de blocage 33 reste immobile à sa position de libération.

L'organe de blocage 33 reste immobile jusqu'à ce que la fermeture du moule soit complète, et que l'autre cavité 39 soit formée.

Lors du mouvement d'ouverture du moule, l'autre seconde partie de moule 37 se déplace par rapport à la première partie de moule 13 suivant un mouvement inverse, c'est-à-dire suivant une direction opposée à la direction D matérialisée sur les figures.

Dans la première partie de ce mouvement, le second tronçon 51 coulisse contre le second tronçon complémentaire 57. L'autre seconde partie de moule 37 se déplace donc sans provoquer un décalage de l'organe de blocage 33 de sa position de libération vers sa position de blocage. Au cours de cette première partie du mouvement, la pièce 1 est entraînée avec l'autre seconde partie de moule 37, et franchit le nez de l'organe de blocage 33.

L'organe de blocage 33 ne commence son mouvement de coulissement vers sa position de blocage que lorsque la couche de support 3 a déjà franchi l'organe de blocage 33.

Un ensemble de fabrication de la pièce 1 va maintenant être décrit.

Cet ensemble de fabrication est spécialement conçu pour la mise en oeuvre du procédé de fabrication ci-dessus.

Inversement, le procédé de fabrication est spécialement adapté pour être mis en oeuvre par l'ensemble de fabrication.

L'ensemble de fabrication 59 comporte, comme illustré sur les figures, un moule 9 comprenant une première partie de moule 13 présentant une première surface 27 et une seconde partie de moule 25 présentant une seconde surface 29, les première et seconde parties de moule 13, 25 étant mobiles l'une par rapport à l'autre entre une position d'ouverture du moule 9 et une position de fermeture du moule 9.

A cette fin, l'ensemble de fabrication 59 comporte un actionneur 61, représenté schématiquement sur les figures, configuré pour déplacer les première et seconde parties de moule 13, 25 l'une par rapport à l'autre entre la position d'ouverture du moule 9 et la position de fermeture du moule 9.

Les première et seconde parties de moule 13, 25 sont comme décrit plus haut.

La première surface 27 et la seconde surface 29 délimitent ensemble une cavité 31 en position de fermeture du moule (position de la figure 3).

La cavité 31 présente la forme de la couche de support 3.

La première partie de moule 13 et la seconde partie de moule 25 se déplacent de la position d'ouverture à la position de fermeture l'une par rapport à l'autre selon un mouvement de translation, suivant la direction D.

L'ensemble 59 comporte également un dispositif 62 d'introduction dans le moule 9 d'une feuille de support 11, la couche de décor 5 étant déposée sur la feuille de support 11.

Comme décrit plus haut, l'ensemble 59 comprend un film continu 19 comportant un grand nombre de feuilles 11 portant chacune une couche de décor 5.

Le film 19 forme une bobine 21.

Le dispositif d'introduction 62 est configuré pour dérouler la bobine 21, la feuille 11 utilisée à l'itération précédente du procédé de fabrication, dépourvue de décor 5, étant par le même mouvement extraite hors du moule 9 et enroulée dans une bobine 23.

Le dispositif d'introduction 62 comporte des moyens pour entrainer en rotation les bobines 21 et 23 et pour guider le film 19. Ces moyens sont de type classique et ne seront pas décrits ici.

L'ensemble 59 comprend également un dispositif 63 de pincement de la feuille 11 contre la première partie de moule 13 par un cadre 15.

Le cadre 15 est comme décrit plus haut.

Le dispositif de pincement 63 comporte un actionneur 64 déplaçant le cadre 15 entre une position de pincement représentée sur la figure 2 et une position écartée représentée sur la figure 1.

Comme décrit plus haut, dans la position de pincement, la feuille 11 est pincée entre le cadre 15 et la première surface 27, de manière étanche.

Elle est pincée sur toute sa périphérie.

Dans la position écartée du cadre 15, la feuille 11 peut être déplacée par rapport à la première partie de moule 13.

Quand les premières et secondes parties de moule 13, 25 sont dans la position de fermeture et que la feuille 11 est pincée par le cadre 15 contre la première partie de moule 13, la feuille de support 11 est engagée dans la cavité 31 en vis-à-vis de la première surface 27. La couche de décor 5 s'étend à l'opposé de la première surface 27, c'est-à-dire en vis-à-vis de la seconde surface 29.

L'ensemble 59 comprend de préférence un dispositif 65 pour plaquer la feuille 11 contre la première surface 27, par exemple en tirant au vide le volume délimité entre la feuille 11 et la première surface 27.

L'ensemble 59 comprend encore un dispositif 67 d'injection de la couche de support 3 dans la cavité 31, entre la couche de décor 5 et la seconde surface 29.

Ce dispositif d'injection 67 est de type classique. Il est prévu pour injecter la matière plastique constituant la couche de support 3 dans la cavité 31, à l'état liquide.

Il est à noter que la couche de décor 5 est transférée sur la couche de support 3 lors de l'injection. Ceci est obtenu du fait de la nature du matériau constituant la couche de décor 5, du fait de la nature du matériau constituant la feuille de support 11 et du fait de la nature du matériau constituant la couche de support 3. Ceci est bien connu dans le cadre d'un procédé de type IMD.

L'ensemble 59 comporte également au moins un organe de blocage mobile 33 monté sur le cadre 15.

L'au moins un organe de blocage 33 est déplaçable par rapport au cadre 15 entre une position de blocage adaptée pour fixer la couche de support 3 à la première partie de moule 13, et une position de libération adaptée pour que la couche de support 3 ne soit pas fixée à la première partie de moule 13 par l'organe de blocage 33.

L'organe de blocage 33 est du type décrit ci-dessus.

Typiquement, l'ensemble 59 comprend une pluralité d'organes de blocage mobiles 33, répartis sur la périphérie du cadre 15, et coopérant avec des points de la couche de support 3 répartis sur le pourtour de cette couche.

Comme décrit plus haut, le ou chaque organe de blocage 33 est mobile en translation par rapport au cadre 15 entre la position de blocage et la position de libération.

Le cadre 15 comprend également un organe de rappel 41 sollicitant le ou chaque organe de blocage 33 vers la position de blocage.

L'organe de rappel 41 est de préférence à actionnement mécanique. Par exemple, l'organe de rappel 41 est un organe élastique tel qu'un ressort.

La position de blocage et la position de libération sont comme décrit plus haut.

Ainsi, l'au moins un organe de blocage mobile 33 permet, quand le moule 9 est ouvert après injection de la couche de support 3, de retenir la couche de support 3 contre la première partie de moule 13, celle-ci n'étant pas entrainée par la seconde partie de moule 25 lors de l'ouverture du moule.

L'ensemble 59 comporte également une autre seconde partie de moule 37, présentant une autre seconde surface 35, l'actionneur 61 étant configuré pour déplacer la première partie de moule 13 et l'autre seconde partie de moule 37 l'une par rapport à l'autre entre une autre position d'ouverture du moule 9 et une autre position de fermeture du moule 9.

Dans l'autre position de fermeture, la première surface 27 et l'autre seconde surface 35 délimitent ensemble une autre cavité 39.

La couche de support 3 fixée à la première partie de moule 13 par au moins un organe de blocage 33 est engagée dans l'autre cavité 39 en vis-à-vis de l'autre seconde surface 35.

L'autre cavité 39 présente la forme de la partie structurelle 7.

Il est à noter que, lorsque la seconde cavité 39 est formée, la couche de support 3 n'est pas forcément fixée à la première partie de moule 13 par l'organe de blocage 33. En variante, elle est fixée à la première partie de moule 13 par l'autre seconde partie de moule 37.

L'ensemble 59 présente également un dispositif 69 d'injection de la partie structurelle 7, représenté schématiquement sur les figures 7 et 8.

Le dispositif d'injection 69 est configuré pour injecter une matière plastique dans l'autre cavité 39, à l'état liquide, cette matière plastique constituant la partie structurelle 7. L'injection est réalisée entre la couche de support 3 et l'autre seconde surface 35.

Ce dispositif d'injection 67 est de type classique.

L'ensemble 59 comprend encore un dispositif 71 de déplacement de l'au moins un organe de blocage 33 par rapport au cadre 15 jusqu'à la position de libération.

Le dispositif de déplacement 71 comporte pour le ou chaque organe de blocage 33 un organe de came 43 monté sur l'autre seconde partie de moule 37.

Cet organe de came 43 est comme décrit plus haut.

Il est configuré pour faire passer l'organe de blocage 33 de sa position de blocage à sa position de libération quand la première partie de moule 13 et l'autre seconde partie de moule 37 se rapprochent l'une de l'autre, lors de la fermeture du moule 9.

Il est également configuré pour maintenir l'organe de blocage 33 dans sa position de libération au début de la course d'ouverture du moule 9, c'est-à-dire quand l'autre seconde partie de moule 37 et la première partie de moule 13, après injection de la partie structurelle 7, s'écartent l'une de l'autre.

Le dispositif de déplacement 71 maintient l'organe de blocage 33 dans sa position de libération sur une course suffisante pour que la pièce 1 soit évacuée avec l'autre seconde partie de moule 37 lors de l'ouverture du moule, sans interférence avec le ou chaque organe de blocage 33 revenant vers sa position de blocage.

L'organe de came 43 coopère avec une forme formant suiveur de came 45, formée sur le ou chaque organe de blocage 33.

L'organe de came 43 et la forme formant suiveur de came 45 sont comme décrit plus haut.

Le procédé et l'ensemble de fabrication présentent de multiples avantages.

Le fait de réaliser l'étape d'introduction en déplaçant par rapport à la première partie de moule un film continu comportant un grand nombre de feuilles portant chacune une couche de décor, permet d'effectuer l'étape d'introduction de manière très efficace.

Une couche de décor formée d'encre est particulièrement bien adaptée au procédé.

Le fait que le ou chaque organe de blocage soit mobile en translation par rapport au cadre entre la position de blocage et la position de libération rend l'ensemble de fabrication et le procédé correspondant particulièrement simples.

Le fait que le ou chaque organe de blocage soit sollicité dans sa position de blocage par un organe de rappel monté sur le cadre permet également de simplifier le mouvement du ou de chaque organe de blocage.

Le fait que le ou chaque organe de blocage est déplacé dans la position de libération par un organe de came monté sur l'autre seconde partie de moule contribue également à la simplification du mouvement du ou de chaque organe de blocage. Le moule ne doit donc pas comporter d'actionneur dédié au déplacement du ou de chaque organe de blocage.

Le procédé et l'ensemble de fabrication peuvent présenter de multiples variantes.

La feuille n'est pas nécessairement intégrée dans un film continu enroulé de manière à former une bobine. Les feuilles pourraient être introduites une à une, indépendamment les unes des autres.

La couche de décor pourrait être une couche différente d'une couche d'encre, sous réserve de pouvoir être transférée à la couche de support lors de l'injection, comme prévu par le procédé IMD.

Le déplacement de la première partie de moule et de la seconde partie de moule ou de l'autre seconde partie de moule l'une par rapport à l'autre n'est pas nécessairement une translation rectiligne, mais pourrait être un mouvement de tout autre type, par exemple une rotation.

Le ou chaque organe de blocage pourrait se déplacer entre sa position de blocage et sa position de libération non pas en translation mais selon un autre mouvement, comportant par exemple une rotation.

L'organe de blocage pourrait être déplacé entre sa position de blocage et sa position de libération par un actionneur dédié.

Des actionneurs différents peuvent être utilisés pour déplacer la seconde partie de moule et pour déplacer l'autre seconde partie de moule.

Le déplacement de l'au moins un organe de blocage à sa position de libération peut intervenir non pas au moment de la seconde fermeture du moule, lors du déplacement de la première partie de moule et de l'autre seconde partie de moule l'une par rapport à l'autre, mais à un autre moment, par exemple immédiatement avant l'ouverture finale du moule.

## Revendications

1. Procédé de fabrication d'une pièce (1) comprenant une couche de support (3), une couche de décor (5) couvrant une première face de la couche de support (3) et une partie structurelle (7) fixée à une seconde face de la couche de support (3) opposée à la première face, le procédé comprenant les étapes suivantes :
- introduction dans un moule (9) d'une feuille de support (11), la couche de décor (5) étant déposée sur la feuille de support (11) ;
- pincement de la feuille de support (11) contre une première partie (13) du moule par un cadre (15) ;
- fermeture du moule (9), une première surface (27) de la première partie de moule (13) et une seconde surface (29) d'une seconde partie de moule (25) délimitant ensemble une cavité (31), la feuille de support (11) étant engagée dans la cavité (31) en vis-à-vis de la première surface (27), la couche de décor (5) s'étendant en vis-à-vis de la seconde surface (29) ;
- injection de la couche de support (3) dans la cavité (31) entre la couche de décor (5) et la seconde surface (29), la couche de décor (5) étant transférée sur la couche de support (3) ;
- ouverture du moule (9), la couche de support (3) restant fixée à la première partie de moule (13) par au moins un organe de blocage (33) mobile monté sur le cadre (15), l'au moins un organe de blocage (33) occupant par rapport au cadre (15) une position de blocage de la couche de support (3) ;
- fermeture du moule (9), la première surface (27) de la première partie de moule (13) et une autre seconde surface (35) d'une autre seconde partie de moule (37) délimitant ensemble une autre cavité (39), la couche de support (3) étant engagée dans l'autre cavité (39) en vis-à-vis de l'autre seconde surface (35) ;
- déplacement de l'au moins un organe de blocage (33) par rapport au cadre (15) à une position de libération dans laquelle la couche de support (3) n'est pas fixée à la première partie de moule (13) par l'organe de blocage (33) ;
- injection de la partie structurelle (7) dans l'autre cavité (39) entre la couche de support (3) et l'autre seconde surface (35) ;
- ouverture du moule (9) et évacuation de la pièce (1).

2. Procédé de fabrication selon la revendication 1, dans lequel l'étape d'introduction est effectuée en déplaçant par rapport à la première partie de moule (13) un film (19) continu comportant un grand nombre de feuilles (11) portant chacune une couche de décor (5).

3. Procédé de fabrication selon la revendication 1 ou 2, dans lequel la couche de décor (5) comprend une couche d'encre.

4. Procédé de fabrication selon l'une quelconque des revendications 1 à 3, dans lequel le ou chaque organe de blocage (33) est mobile en translation par rapport au cadre (15) entre la position de blocage et la position de libération.

5. Procédé de fabrication selon la revendication 4, dans lequel le ou chaque organe de blocage (33) est sollicité vers la position de blocage par un organe de rappel (41) monté sur le cadre.

6. Procédé de fabrication selon la revendication 5, dans lequel le ou chaque organe de blocage (33) est déplacé dans la position de libération par un organe de came (43) monté sur l'autre seconde partie de moule (37).

7. Ensemble de fabrication d'une pièce (1) comprenant une couche de support (3), une couche de décor (5) couvrant une première face de la couche de support (3) et une partie structurelle (7) fixée à une seconde face de la couche de support (3) opposée à la première face, l'ensemble (59) comprenant :
- un moule (9) comprenant une première partie de moule (13) présentant une première surface (27) et une seconde partie de moule (25) présentant une seconde surface (29), les première et seconde parties de moule (13, 25) étant mobiles l'une par rapport à l'autre entre une position d'ouverture du moule et une position de fermeture du moule, la première surface (27) et la seconde surface (29) délimitant ensemble une cavité (31) en position de fermeture du moule ;
- un dispositif (62) d'introduction dans le moule (9) d'une feuille de support (11), la couche de décor (5) étant déposée sur la feuille de support (11) ;
- un dispositif (63) de pincement de la feuille (11) contre la première partie du moule (13) par un cadre (15), la feuille de support (11) étant engagée dans la cavité (31) en vis-à-vis de la première surface (27), la couche de décor (5) s'étendant à l'opposé de la première surface (27) ;
- un dispositif (67) d'injection de la couche de support (3) dans la cavité (31) entre la couche de décor (5) et la seconde surface (27), la couche de décor (5) étant adaptée pour être transférée sur la couche de support (3) lors de l'injection ;
- au moins un organe de blocage (33) mobile monté sur le cadre (15), l'au moins un organe de blocage (33) étant déplaçable par rapport au cadre (15) entre une position de blocage dans laquelle la couche de support (3) est fixée à la première partie de moule (13) par l'organe de blocage (33) et une position de libération dans laquelle la couche de support (3) n'est pas fixée à la première partie de moule (13) par l'organe de blocage (33) ;
- une autre seconde partie de moule (37) présentant une autre seconde surface (35), la première partie de moule (13) et l'autre seconde partie de moule (37) étant mobiles l'une par rapport à l'autre entre une autre position d'ouverture du moule et une autre position de fermeture du moule, la première surface (27) et l'autre seconde surface (35) délimitant ensemble une autre cavité (39) dans l'autre position de fermeture, la couche de support (3) étant engagée dans l'autre cavité (39) en vis-à-vis de l'autre seconde surface (35) dans l'autre position de fermeture ;
- un dispositif (69) d'injection de la partie structurelle (7) dans l'autre cavité (39) entre la couche de support (3) et l'autre seconde surface (35) ;
- un dispositif (71) de déplacement de l'au moins un organe de blocage (33) par rapport au cadre (15) jusqu'à la position de libération.

8. Ensemble de fabrication selon la revendication 7, dans lequel le ou chaque organe de blocage (33) est mobile en translation par rapport au cadre (15) entre la position de blocage et la position de libération.

9. Ensemble de fabrication selon la revendication 7 ou 8, dans lequel le cadre (15) comprend un organe de rappel (41) sollicitant le ou chaque organe de blocage (33) vers la position de blocage.

10. Ensemble de fabrication selon l'une quelconque des revendications 7 à 9, dans lequel le dispositif de déplacement (71) comprend pour le ou chaque organe de blocage (33) un organe de came (43) monté sur l'autre seconde partie de moule (37).
